# EUROPEAN PATENT APPLICATION

(11) **EP 4 838 360 A1**
(43) Date of publication of application: **11.11.2026**
(21) Application number: 26176601.8
(22) Date of filing: 05.05.2026
(51) Int. Cl.: G06F 9/48

(54) **METHOD AND SYSTEM FOR REPAIRING CONTROL SAFETY VIOLATIONS USING SCHEDULER PATCH SYNTHESIS**

(30) Priority: 05.05.2025 IN 202521043632
(71) Applicant: Tata Consultancy Services Limited, Maharashtra (IN)
(72) Inventor: YEOLEKAR, Anand Vijay, 411028 Pune, Maharashtra (IN); RAMANATHAN, Venkatesh, 411057 Pune, Maharashtra (IN); CHAKRABORTY, Supratik, 411057 Pune, Maharashtra (IN)
(74) Representative: Goddar, Heinz J.

(57) **Abstract**

Cyber-physical systems are typically implemented in software as a set of real-time control tasks. Timing uncertainty at the low level scheduling layer can lead to deadline misses of control tasks, that affect control performance and may violate safety properties associated with the high-level control applications. The present disclosure presents a technique to detect and repair control safety violations by synthesizing a scheduler patch - a pre-computed list of jobs to be not scheduled at runtime - that eliminates these violations without the need of modifications at the control or task layer. The technique utilizes a guess-check-repair loop on top of an exact encoding of control and scheduling behaviors, enabling efficient packing of multiple control applications on the execution platform while guaranteeing control safety.

## Description

### CROSS-REFERENCE TO RELATED APPLICATIONS AND PRIORITY

The present application claims priority from Indian application no. 202521043632, filed on May 5, 2025.

### TECHNICAL FIELD

The disclosure herein generally relates to the field cyber-physical systems and, more particularly, to a method and system for detecting and repairing control safety violations by synthesizing a patch for the real-time task scheduler.

### BACKGROUND

Cyber-physical systems (CPS) such as automotive systems today have several millions of lines of code deployed on a distributed architecture of electronic control units (ECUs). With software increasingly used to monitor and control various features of CPS, the demand to pack more code per ECU is only rising. This poses the challenge of ensuring timing correctness for the CPS designer. CPS development typically follows a separation of concerns approach wherein the high-level control applications are designed assuming certain timing guarantees from the low-level scheduling and implementation details. Given a plethora of timing uncertainties at the low-level scheduling layer, such as variation in execution time of task instances, time-triggered activation of control tasks facing release jitter, or activation of higher-priority event-triggered tasks to handle interrupt calls, and the like, deadline misses can occur in unexpected ways in an execution of the tasks. Thus, meeting timing expectations is increasingly challenging.

The schedule synthesis problem checks whether it is possible to schedule (control) tasks such that deadline misses can be avoided altogether, and in case not, can some patterns of deadline misses be factored in during schedule synthesis to guarantee a high-level goal e.g., control safety. Given that the control systems with feedback mechanisms are generally designed to be robust to delays in sensing and actuation, several researchers have used this insight to synthesize schedules admitting non-critical deadline misses to satisfy control safety or stability. However, most works have attempted to synthesize static schedules of tasks at hand i.e., a lookup table that dictates the next task to be scheduled. There are limitations of static scheduling for CPS, such as (i) Inflexibility: lookup table needs to be recomputed when new tasks are added (ii) Inefficiency: the computing resource (processor) time is wasted e.g., when task instances terminate early, or accounting for jitter and (iii) Difficult/inefficient to synthesize schedules in the presence of sporadic tasks. Hence there is a challenge in ensuring that all control systems meet their safety specifications in the presence of low level timing uncertainties, given multiple controllers of the CPS systems to be deployed on an ECU.

### SUMMARY

Embodiments of the present disclosure present technological improvements as solutions to one or more of the above-mentioned technical problems recognized by the inventors in conventional systems. For example, in one embodiment, a method for repairing control safety violations using scheduler patch synthesis is provided. The method includes receiving, by one or more hardware processors, an input data associated with a Cyber-Physical System (CPS), wherein the input data comprises a control specification associated with each of a plurality of control systems, a task specification associated with each of a plurality of tasks, a horizon, and a scheduling policy associated with a task scheduler. Further, the method includes generating a plurality of constraints for each of the plurality of control systems based on the input data using a symbolic logic generator. Finally, the method includes obtaining a scheduler patch by repeating until a Satisfiability Modulo Theories (SMT) solver fails to generate an error trace: (i) generating a solution based on the plurality of constraints associated with each of the plurality of control systems using the SMT solver, wherein the solution is an error trace associated with a safety violated control system from among the plurality of control systems, wherein the error trace comprises (a) values of control state variables and (b) run of the plurality of tasks indicating deadline hit and deadline miss (ii) extracting a hit-miss binary sequence based on the error trace associated with the safety violated control system, wherein a hit from the hit-miss binary sequence corresponds to correct control update for the associated control system based on standard control equations, and wherein a miss from the hit-miss binary sequence corresponds to zero (iii) generating a plurality of binary sequence combinations by flipping the deadline misses to deadline hits based on the hit-miss binary sequence of the associated control system (iv) identifying at least one binary sequence combination from among the plurality of binary sequence combinations by simulating the associated safety violated control system based on the plurality of binary sequence combinations such that the simulation results into (a) the associated control system safety and (b) loopback convergence (v) labelling one or more flipped instances from among the at least one binary sequence combination as one or more critical task instances for the associated control system (vi) identifying a plurality of masking task instances for the one or more critical task instances, wherein the plurality of masking tasks causes a deadline miss to the at least one critical task instance and (viii) constructing a refined plurality of constraints by dropping at least one task instance from among the plurality of masking task instances, prioritizing the at least one critical task thereby guaranteeing safety of the CPS, wherein above steps are repeated by incrementing the horizon to a predefined value when unable to drop a non-critical task making room for a critical task and, wherein the greater horizon is obtained by adding previous horizon with Least Common Multiplier (LCM) of periodic tasks.

In another aspect, a system for repairing control safety violations using scheduler patch synthesis is provided. The system includes at least one memory storing programmed instructions, one or more Input /Output (I/O) interfaces, and one or more hardware processors operatively coupled to the at least one memory, wherein the one or more hardware processors are configured by the programmed instructions to receive an input data associated with a Cyber-Physical System (CPS), wherein the input data comprises a control specification associated with each of a plurality of control systems, a task specification associated with each of a plurality of tasks, a horizon, and a scheduling policy associated with a task scheduler. Further, the one or more hardware processors are configured by the programmed instructions to generate a plurality of constraints for each of the plurality of control systems based on the input data using a symbolic logic generator. Finally, the one or more hardware processors are configured by the programmed instructions to obtain a scheduler patch by repeating until a Satisfiability Modulo Theories (SMT) solver fails to generate an error trace: (i) generating a solution based on the plurality of constraints associated with each of the plurality of control systems using the SMT solver, wherein the solution is an error trace associated with a safety violated control system from among the plurality of control systems, wherein the error trace comprises (a) values of control state variables and (b) run of the plurality of tasks indicating deadline hit and deadline miss (ii) extracting a hit-miss binary sequence based on the error trace associated with the safety violated control system, wherein a hit from the hit-miss binary sequence corresponds to correct control update for the associated control system based on standard control equations, and wherein a miss from the hit-miss binary sequence corresponds to zero (iii) generating a plurality of binary sequence combinations by flipping the deadline misses to deadline hits based on the hit-miss binary sequence of the associated control system (iv) identifying at least one binary sequence combination from among the plurality of binary sequence combinations by simulating the associated safety violated control system based on the plurality of binary sequence combinations such that the simulation results into (a) the associated control system safety and (b) loopback convergence (v) labelling one or more flipped instances from among the at least one binary sequence combination as one or more critical task instances for the associated control system (vi) identifying a plurality of masking task instances for the one or more critical task instances, wherein the plurality of masking tasks causes a deadline miss to the at least one critical task instance and (viii) constructing a refined plurality of constraints by dropping at least one task instance from among the plurality of masking task instances, prioritizing the at least one critical task thereby guaranteeing safety of the CPS, wherein above steps are repeated by incrementing the horizon to a predefined value when unable to drop a non-critical task making room for a critical task and, wherein the greater horizon is obtained by adding previous horizon with Least Common Multiplier (LCM) of periodic tasks.

In yet another aspect, here are provided one or more non-transitory machine-readable information storage media comprising one or more instructions which when executed by one or more hardware processors, causes the computing device to receive an input data associated with a Cyber-Physical System (CPS), wherein the input data comprises a control specification associated with each of a plurality of control systems, a task specification associated with each of a plurality of tasks, a horizon, and a scheduling policy associated with a task scheduler. Further, the one or more non-transitory machine-readable information storage media comprising one or more instructions which when executed by one or more hardware processors, causes the computing device to generate a plurality of constraints for each of the plurality of control systems based on the input data using a symbolic logic generator. Finally, the one or more non-transitory machine-readable information storage media comprising one or more instructions which when executed by one or more hardware processors, causes the computing device to obtain a scheduler patch by repeating until a Satisfiability Modulo Theories (SMT) solver fails to generate an error trace: (i) generating a solution based on the plurality of constraints associated with each of the plurality of control systems using the SMT solver, wherein the solution is an error trace associated with a safety violated control system from among the plurality of control systems, wherein the error trace comprises (a) values of control state variables and (b) run of the plurality of tasks indicating deadline hit and deadline miss (ii) extracting a hit-miss binary sequence based on the error trace associated with the safety violated control system, wherein a hit from the hit-miss binary sequence corresponds to correct control update for the associated control system based on standard control equations, and wherein a miss from the hit-miss binary sequence corresponds to zero (iii) generating a plurality of binary sequence combinations by flipping the deadline misses to deadline hits based on the hit-miss binary sequence of the associated control system (iv) identifying at least one binary sequence combination from among the plurality of binary sequence combinations by simulating the associated safety violated control system based on the plurality of binary sequence combinations such that the simulation results into (a) the associated control system safety and (b) loopback convergence (v) labelling one or more flipped instances from among the at least one binary sequence combination as one or more critical task instances for the associated control system (vi) identifying a plurality of masking task instances for the one or more critical task instances, wherein the plurality of masking tasks causes a deadline miss to the at least one critical task instance and (viii) constructing a refined plurality of constraints by dropping at least one task instance from among the plurality of masking task instances, prioritizing the at least one critical task thereby guaranteeing safety of the CPS, wherein above steps are repeated by incrementing the horizon to a predefined value when unable to drop a non-critical task making room for a critical task and, wherein the greater horizon is obtained by adding previous horizon with Least Common Multiplier (LCM) of periodic tasks.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for repairing control safety violations using scheduler patch synthesis, in accordance with some embodiments of the present disclosure.
FIG. 1B is an example modular block diagram of the system for repairing control safety violations using scheduler patch synthesis, in accordance with some embodiments of the present disclosure.
FIGS. 2A and 2B illustrates a flow diagram for a processor implemented method for repairing control safety violations using scheduler patch synthesis, in accordance with some embodiments of the present disclosure.
FIG. 3 illustrates an example plot illustrating an ideal trajectory and safety violating trajectory for the processor implemented method for repairing control safety violations using scheduler patch synthesis, in accordance with some embodiments of the present disclosure.
FIG. 4A illustrates an example plot illustrating task run for the processor implemented method for repairing control safety violations using scheduler patch synthesis, in accordance with some embodiments of the present disclosure.
FIG. 4B illustrates an example synthesized scheduler patch for the processor implemented method for repairing control safety violations using scheduler patch synthesis, in accordance with some embodiments of the present disclosure.
FIG. 5 illustrates an example logical flow diagram for the processor implemented method for repairing control safety violations using scheduler patch synthesis, in accordance with some embodiments of the present disclosure.
FIG. 6 illustrates how there is a deadline-miss of a (critical) task instance due to jitter and sporadic task arrival at the scheduling layer. for the processor implemented method for repairing control safety violations using scheduler patch synthesis, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identify the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Conventional Cyber-physical systems (CPS) mainly focus on studying the impact of deadline misses on control stability as the property of interest. Except few prior arts which jointly models scheduling and control behavior, most works either assume a deadline miss model or it has to be provided by the user, which can lead to pessimistic analysis in the absence of an exact model of the low-level scheduling behavior.

Several conventional methods are built upon the paradigm of weakly-hard constraints in both analysis and repair of control performance in terms of control stability or safety. Repair may take the form of adjusting task periods or discarding the scheduling policy and arriving at a new static schedule guaranteeing control safety, or adjusting the controller. Another conventional method extends the approach to synthesize static schedules for control tasks with distinct periods to meet control safety, is closely related to the present disclosure. In the above said conventional method, authors propose to readjust task periods i.e., re-design the controllers with new periods, along with discovering a set of weakly-hard constraints for each controller, such that an overall static schedule guaranteeing control safety can be synthesized.

However, as observed, all above approaches require non-trivial changes to the task specification or control specification, or they discard the scheduling policy to arrive at a static schedule. The present disclosure, in contrast, avoids control safety violations by discarding pre-computed non-critical task instances at runtime by the scheduler, so that the processor is available to service more critical ones. This makes present disclosure minimally "invasive" i.e., requiring no modifications to the control systems, tasks or scheduling policy (except slightly modifying the OS scheduler). Unlike some conventional approaches that checks or guarantees safety over a bounded horizon, the present disclosure guarantees both safety and state convergence over infinite control evolution by checking that states do not diverge at the end of the analysis or observation window.

To address the above said challenges, embodiments herein provide a method and system for repairing control safety violations using scheduler patch synthesis. The present disclosure repairs the safety violations by helping the scheduler discriminate between task instances that are critical to control safety vs. ones that are not critical to safety. Non-critical task instances are candidates for not getting scheduled at runtime, freeing up the computing resource for the more critical ones. As the physical plant states evolve with time, different controllers differ in their sensitivity to deadline misses (aka missed control updates). This is the key to the present disclosure to modify the existing scheduler to be sensitive to the high level goal of control safety.

Thus, when control safety is violated due to timing uncertainty at the low-level scheduling layer, instead of synthesizing a new static schedule i.e., changing the scheduling policy, the present disclosure synthesizes a scheduler patch for the existing scheduling policy. This patch is a pre-computed list of (non-critical) task instances, that is made available to the scheduler at system start, and which it consults at runtime when making a decision on dispatching a task instance from its ready queue. Thus, the scheduler operation is slightly modified as follows: (i) each time the scheduler is invoked to dispatch a job for execution from its queue, it consults the patch, and (ii) if this job ID is present in the patch list, the job is discarded from the queue i.e. the job is not scheduled at runtime.

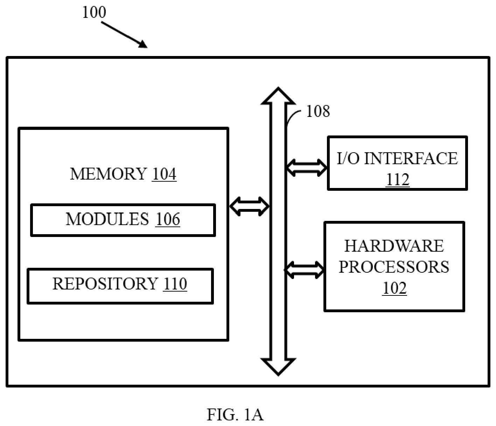

Referring now to the drawings, more particularly to FIG. 1A through FIG. 6, where similar reference characters denote corresponding features consistently throughout the figures, there are shown preferred embodiments, and these embodiments are described in the context of the following exemplary system and/or method.

FIG. 1A is a functional block diagram of a system 100 for repairing control safety violations using scheduler patch synthesis, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

The plurality of modules 106 includes programs or coded instructions that supplement applications or functions performed by the system 100 for Repairing control safety violations using scheduler patch synthesis. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for repairing control safety violations using scheduler patch synthesis.

The data repository (or repository) 110 may include a plurality of abstracted pieces of code for refinement and data that is processed, received, or generated as a result of the execution of the plurality of modules in the module(s) 106.

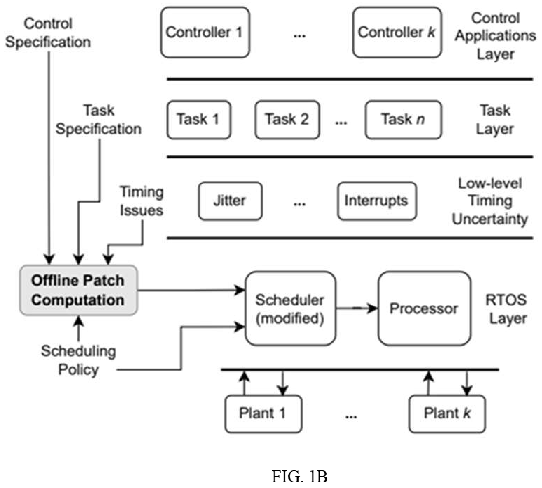

Although the data repository 110 is shown internal to the system 100, it will be noted that, in alternate embodiments, the data repository 110 can also be implemented externally to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory, a Relational Database Management System (RDBMS). FIG. 1B is an example modular block diagram of the system for repairing control safety violations using scheduler patch synthesis, in accordance with some embodiments of the present disclosure.

Now referring to FIG. 1B, the said figure illustrates the integration of the synthesized scheduler patch in a typical CPS design and development flow. The design and development process is typically layered, starting with the control applications at hand, followed by a task layer that realizes the software implementation of the controllers, followed by unavoidable timing uncertainties associated with release and/or network jitter, sporadic triggers such as interrupts and the like followed by the real-time Operating System (RTOS) scheduler layer that is configured for a given scheduling policy. For example, given the specifications for control applications, tasks, timing uncertainty and the scheduling policy, the present disclosure synthesizes a patch offline. The system scheduler code is modified to accept this patch as input (at system start). The scheduler does not schedule jobs listed in the patch at runtime. This is in contrast to online approaches that need to compute a new decision based on the current system state. The patch-based job-drop approach of the present disclosure does not involve any computation (other than a list lookup), nor is concerned about timing uncertainties at runtime (these are already factored in during the offline patch synthesis phase).

It is worth noting that the present disclosure requires the above small change to the real-time OS scheduler, without any changes to the control applications (viz. recomputing the controller gains or the discretization timestep), task specification (viz. modifying task parameters), or the scheduling policy (viz. replacing with a static schedule). In other words, the present disclosure patches the scheduler to guarantee control safety without requiring any changes to the existing CPS design and layers.

The present disclosure can be applied in a variety of control, task and scheduling models. However, for illustration purpose, the examples of the present disclosure are chosen from automotive controllers, task sets admitting a mix of periodic and sporadic tasks, task parameters admitting nondeterminism in task runs, and non-preemptive earliest deadline first (NP-EDF) as the scheduling policy. This combination of periodic and sporadic tasks can model realistic CPS, and in particular, our analysis and repair approach can benefit safety-critical systems that require formal guarantees of timing correctness. For example, periodic tasks are those that execute at regular, predictable intervals, while sporadic tasks occur randomly or at unpredictable intervals.

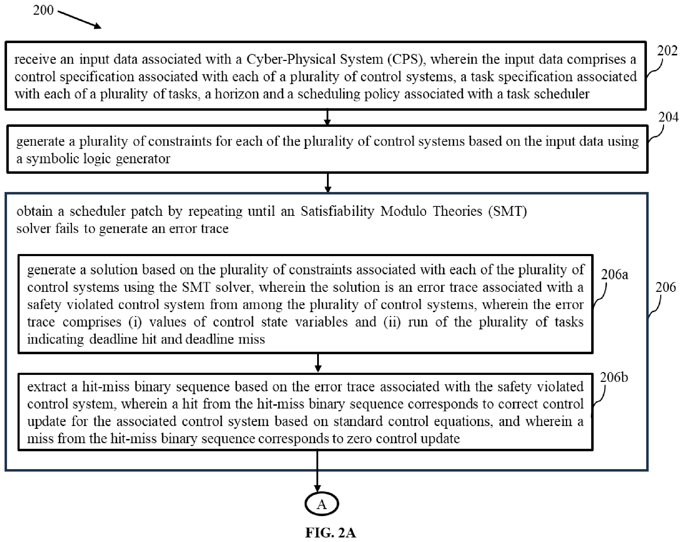

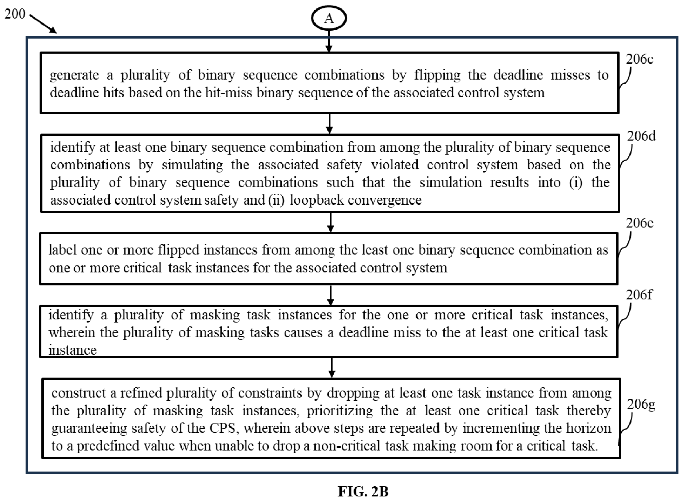

The working of the components of system 100 are explained with reference to the method steps depicted in FIGS. 2A and 2B, which is an exemplary flow diagram illustrating a method 200 for repairing control safety violations using scheduler patch synthesis implemented by the system of FIG. 1A and FIG. 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and FIG. 1B and the steps of flow diagram as depicted in FIGS. 2A and 2B. The method 200 may be described in the general context of computer executable instructions. Generally, computer executable instructions can include routines, programs, objects, components, data structures, procedures, modules, functions, etc., that perform particular functions or implement particular abstract data types.

The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented with any suitable hardware, software, firmware, or combination thereof.

Now referring to FIGS. 2A and 2B, at step 202 of method 200, the one or more hardware processors 102 are configured by the programmed instructions to receive an input data associated with a Cyber-Physical System (CPS). The input data includes a control specification associated with each of a plurality of control systems, a task specification associated with each of a plurality of tasks, an observation window or analysis horizon, and a scheduling policy associated with a task scheduler. The plurality of control specifications includes initial sets of states and an associated plurality of safety properties. The plurality of tasks includes periodic and sporadic tasks, of which the periodic tasks are associated with the tasks implementing the controllers of the CPS. The task specification associated with each of the plurality of tasks includes a task ID, task type, a task period, a worst case execution time, a best case execution time, a jitter and a priority. The scheduling policy is one of a) an earliest deadline first scheduling technique (ii) a fixed priority scheduling technique and (iii) other scheduling policies that can be suitably encoded using symbolic logic.

Let C be a set of (discrete) control systems. *cᵢ* ∈ *C* describes the plant model and controller as given in equations (1) and (2). ${x}_{i , k + 1} = {A}_{i} {x}_{i , k} + {B}_{i} {u}_{i , k}$ (1) ${u}_{i , k} = {R}_{i} - {K}_{i} {x}_{i , k - 1}$ (2) where *xᵢ* ∈ R^{*n*^{×1}} is the discrete state vector, *n* ≥ 1 is the control system dimension; *k* ∈ N denotes the discrete steps of evolution; *Aᵢ* ∈ *R^{nxn}* and *Bᵢ* ∈ R^{*n*^{×1}} are matrices specifying the discrete-time plant model with timestep *δᵢ*. The control input *uᵢ* ∈ R is computed using a state feedback vector *Kᵢ* ∈ _{R^{1×}ₙ}, and an optional reference value *Rᵢ* ∈ R. Since the controller computation is implemented as a software task running on a processor, there is a 1-step delay in sensing and actuation i.e., applying the control input. The initial state *x*_{*i*,0} at time *t* = 0 must lie in a user-specified interval [*Lᵢ*,*Uᵢ*].

Since the present disclosure aims in guaranteeing safety over an infinite time horizon (as opposed to earlier works that considered finite time horizons), the present disclosure does not take any time horizon input from the user. Instead, a finite time horizon *H* was hypothesized and to synthesize a drop set that ensures (i) safety within this horizon starting from an initial set [*L,U*] of states, and (ii) that the states reached at the end of this horizon lie within the initial set [*L*,*U*]*.* This ensures that the synthesized drop set can be used indefinitely for every time window of duration *H.* Of course, finding such a horizon *H* is difficult in general. Hence, a default value of H is used and kept increasing it appropriately until either the required drop set, or time out is found.

**Table I**

| id | *A* | *B* | *K* | Safety |
|---|---|---|---|---|
| *c*₀ | $\left[\begin{matrix}2.09 & - 0.41 & 0.64 \\ 0.15 & 0.84 & 0.09 \\ 0 & 0 & 0\end{matrix}\right]$ | $\left[\begin{matrix}0 \\ 0 \\ 1.0\end{matrix}\right]$ | [5.23 -1.77 1.58] | 4.5 |
| *c*₁ | $\left[\begin{matrix}1.0 & 0.98 & 2.88 \\ 0.0 & 1.0 & 2.95 \\ 0 & 0 & 0\end{matrix}\right]$ | $\left[\begin{matrix}0 \\ 0 \\ 1.0\end{matrix}\right]$ | [0.19 0.50 1.46] | 4.5 |

For example, considering a two 2-dimensional (discrete) control systems, each of whose dynamics is specified by the pair *x*_{*k*+1} *= AXₖ + Buₖ, uₖ* = *Kx*_{*k*-1}, with the matrices for the two control systems shown in columns *A*, *B*, and *K* of Table I. The initial state for the two systems lies in the boxes [-0.1, 0.1] × [-0.1, 0.1] and [-0.1, 0.1] × [-0.5, 0.1], respectively. The control computation is implemented in software and scheduled as tasks with periodic activation *P* = 150*ms* each, under NP-EDF (non-preemptive earliest deadline first) scheduling policy, with deadline of each task instance set to the task period. The scheduler is mandated to kill a task instance if its worst-case execution time leads to a deadline miss. Such a killing of task can lead to missed control updates at the next step, which in turn, potentially causes a deviation from the ideal control behavior.

A safety box associated with each control system (column Safety in Table I) specifies the safe limits for evolution of all control states. Assuming that each task requires [50, 80] milliseconds in the best- and worst-case execution scenario, tasks are released at time *k* × *Pᵢ* i.e., times 0, 150, 300, ... etc., with deadlines 150, 300, 450, ... etc.,.

When task instances have equal deadlines, the scheduler is allowed to pick one non-deterministically for execution. Clearly, if the chosen task instance executes for over 70ms, the other waiting instance will be killed by the scheduler, since deadline will be missed (assuming the waiting instance requires full worst-case time of 80ms). This leads to, in the worst case scheduling scenario, deadline misses for all instances of one task, and in the best case, no deadline miss of any task (when each non-deterministically picked task instance executes for at most 70ms).

The controllers are implemented in software as a set of periodic tasks, with period corresponding to the discretization timestep of the control systems. The CPS implementation is a combination of real-time tasks corresponding to the controllers having periodic activation, along with possible auxiliary periodic and/or event-triggered tasks such as interrupt service routines. A task *τ* ∈ T is specified as given in equation (3). $τ = \left(i, type, P, O, J, {E}_{_}, \overline{E}\right)$ (3) where *i* is a unique task id, *type* ∈ {*per, spo*} specifies the type of the task as periodic or sporadic, *P* denotes period for periodic tasks or the minimum inter-arrival time between consecutive instances for sporadic tasks, *O* denotes the task offset i.e. the first instance of the task arrives no earlier than time *t = O*, *J* denotes the maximum jitter faced by instances of periodic tasks at release time, and *E, E̅* denote the best- and worst-case execution time of task instances. In an embodiment, the task instances are represented as jobs. The (*i, k*) denote the *k*^{th} job spawned by the *i^{t^{h}}* task. Tasks spawn jobs up to time horizon *H*, with each sporadic task spawning a maximum of $\left⌊\left(H-5 {O}_{i}\right)/{P}_{i}\right⌋ + 1$ jobs i.e. jobs released outside the horizon *H* are ignored. The set of jobs spawned up to time *H* is denoted *J^{H}*. Each job is associated with a discrete release time *r*, start time *s* and end time *e*. A run of the task set (obtained with a scheduler) is an assignment to the symbolic variables *r*,*s*,*e*, forming a timed sequence *σ*: 〈..., (*i*, *k*,*r*, *s*, *e*),...〉.

Due to release jitter, each job spawned by a periodic task has an earliest and latest release time, denoted *r_{i,k}*= *k* × *Pᵢ* +*Oᵢ* and *r̅_{i,k} = k* × *Pᵢ* +*Oᵢ* + *jᵢ*, respectively. The exact instant of release *r_{i,k}* is thus non-deterministic within [*r*, *r̅*]. In the case of sporadic task instances, while the lower bound *r_{i,k}* holds, there is no upper bound, hence *r_{i,k}* ∈ (*r_{i,k}*, ∞), and jobs released after time *H* are ignored. Additionally, the minimum inter-arrival time should hold over consecutive instances of sporadic tasks. The low-level release timing uncertainty associated with both periodic and sporadic tasks are encoded as given in equations (4) and (5). ${ϕ}_{rel} = ∀ \left(i, k\right) : {r}_{- i , k} \leq {r}_{i , k} \leq {\overline{r}}_{i , k} \left(type\left(i\right)=per\right)$ (4) ${Λr}_{- i , k} \leq {r}_{i , k} ∧ \left({r}_{i , k}\leq H⇒{r}_{i , k}-{r}_{i , k - 1}\geq {P}_{i}\right) \left(type\left(i\right)=spo\right)$ (5)

At step 204 of the method 200, the one or more hardware processors 102 are configured by the programmed instructions to generate a plurality of constraints for each of the plurality of control systems based on the input data using a symbolic logic generator as explained below.

For example, to encode the trajectories, the equation (1) was unrolled by introducing symbolic variables *x_{i,j,k}* corresponding to the control states, and *u_{i,k}* corresponding to the control updates. Variable *i* ranges over the number of control systems 1,2,...,∨ *C* ∨,*j* ranges over the dimension of the *i*-th control system 1,2,...,*n*, and *k* ranges over the discrete steps of evolution of the *i*-th control system $0 , 1 , … , \left⌊H/{δ}_{i}\right⌋$. The following constraints are constructed on variables *x_{i,j,k}* as given in equation (6). ${ϕ}_{traj} = {∧}_{i = 1}^{\left|C\right|} \left({∧}_{k = 0}^{\left⌊H/{δ}_{i}\right⌋}\left(\begin{matrix}{∧}_{j = 1}^{n} {x}_{i , j , k + 1} \\ = {\sum }_{m = 1}^{n} {A}_{i , j , m} \times {x}_{i , m , k} + {B}_{i , j} \times {u}_{i , k}\end{matrix}\right)\right)$ (6) where *A_{i,j,m}* refers to the [*j, m*] element in *Aᵢ*, and *B_{i,j}* refers to the j *^{t^{h}}* element in *Bᵢ.*

For example, the initial plant states must satisfy the user-specified bounds as given in equation (7). ${ϕ}_{init} = ∀ i , j : {L}_{i , j} \leq {x}_{i , j , 0} \leq {U}_{i , j}$ (7)

For example, a safety box is associated with each control system, that specifies the safety bound *S* over all control states. Alternately, a safety pipe specifies the maximum permissible deviation *S* from the ideal state *x*, where ideal refers to control states obtained without any deadline miss aka missed control update as given in equation (8). ${ϕ}_{safety} = ∀ i , j , k : \left|{x}_{i , j , k}\right| \leq {S}_{i , j} where , \left|{x}_{i , j , k}-{X}_{i , j , k}\right| \leq {S}_{i , j}$ (8)

Due to timing uncertainties at the task level e.g. release jitter, execution time variation or sporadic tasks, multiple runs of the task set are possible. The task runs are encoded directly as a Satisfiability Modulo Theories (SMT) formula, such that the set of solutions of this formula exactly maps to the set of all valid task runs (and vice versa). To achieve this, appropriate constraints over the symbolic variables *r*,*s*,*e*, ensuring correct behavior with respect to the task runs are introduced, namely, (i) jobs do not overlap, (ii) jobs terminate within the best and worst-case times, (iii) the scheduling policy is respected, and (iv) ready jobs are scheduled as soon as the processor is available. Note that these constraints have to be explicitly constructed over the symbolic variables *r*, *s*, *e*, otherwise the solutions of the SMT formula can lead to spurious runs.

For example, to ensure jobs are scheduled after release, and prevent overlapping among jobs, constraints as given in equation (9) are built. ${ϕ}_{overlap} = ∀ \left(i, k\right) , \left(p, q\right) : \left({r}_{i , k}\leq {s}_{i , k}\right) ∧ \left({e}_{i , k}\leq {s}_{p , q}∨{e}_{p , q}\leq {s}_{i , k}\right)$ (9)

Each job has a deadline associated with it, denoted as *d*. When the deadline is set to be implicit, *d* equals the task period. Thus, for periodic task instances, *d_{i,k} =* (*k +* 1) × *pᵢ* + *oᵢ*, and for sporadic task instances, *d_{i,k}*= *r_{i,k}*+ *pᵢ*. Alternatively, the user can specify deadlines at the task or job level, as part of the task model e.g. interrupt routines, which are modeled as sporadic tasks, may have a tighter user-specified deadline.

Assuming, tasks are scheduled on a uniprocessor under non-preemptive (NP) scheduling policy such as earliest-deadline-first (EDF) as a representative of dynamic priority scheduling, or under rate-monotonic (RM) as a representative of static or fixed priority scheduling. When multiple jobs are ready to run, the contention is resolved, under NP-EDF, by selecting one with the earliest deadline, and under NP-RM, by selecting one that has the least period i.e. highest (static) priority. In case priorities match, a job is selected non-deterministically. It was also assumed that the same task jobs are scheduled in the order of their release. The NP-EDF scheduling was encoded with equal-priority selection uncertainty as given in equation (10). Upon termination of a job, the scheduler picks and schedules another ready job, if available, immediately. In work-conserving (WC) scheduling, i.e. the processor cannot be idle in the presence of waiting jobs. ${ϕ}_{sched} = ∀ \left(i, k\right) , \left(p, q\right) : \left({s}_{i , k}<{s}_{p , q}⇒\left({d}_{i , k}\leq {d}_{p , q}∨{s}_{i , k}\leq {r}_{p , q}\right)\right) ∧ \left(\begin{matrix}{e}_{i , k} \\ \leq {s}_{i , k + 1}\end{matrix}\right)$ (10)

Assuming negligible scheduler execution and context-switching times. To encode WC under NP-EDF, three sets of jobs were defined with respect to each spawned job (*i*, *k*):
- *pred* ( (*i, k*)) is the set of jobs scheduled prior to *job*(*i, k*) in all runs of the task set, computed as: (*p, q*) ∈ *pred* ( (*i, k*)) if *d_{p,q} < d_{i,k}* Λ *r̅_{p,q}* ≤ *r_{i,k}.*
- *succ* ( (*i, k*)) is the set of jobs scheduled post *job*(*i, k*) terminates in all runs, computed as: (*p, q*) ∈ *succ* ( (*i*, *k*)) if *d_{i,k} < d_{p,q}* ∧ *r̅_{p,q}* ≤ *r_{i,k}*.
- *con* ( (*i*, *k*)) is the set of jobs that content i.e. might precede (*i, k*) in some run, computed as: (*p, q*) ∈ *con* ( (*i*, *k*)) if (*p*, *q*) ∉ *pred* ( (*i*, *k*)) ∧ (*p*, *q*) ∉ *succ*( (*i, k*)).

Given *J^{H}*, the above three sets can be computed statically. Sporadic jobs, by definition, can contend with potentially all jobs in *J^{H}*, except those whose deadline is less than *r* of the sporadic job, thus causing a blowup in the *con* set.

Let *pre* = *pred* ∪ *con,* and *post = con* ∪ *succ.* To detect if the processor idles prior to job (*i, k*) being scheduled in any run, it suffices to check if none of the candidate jobs who could precede (*i, k*) had their termination time match the time instant *s_{i,k}.* These candidate jobs are precisely the members of the set *pre* ( (*i, k*)), and no others, by construction of *pre.* WC can be thus encoded by: (i) checking for a non-zero idling interval by enumerating *pre* candidates, and (ii) if idling, then every job scheduled post termination of (*i, k*), must be also released after the idling. This latter set of jobs corresponds precisely to the *post* set, and no others. In other words, any processor idling interval should not overlap with the waiting time of any job. Thus the constraints built are as given in equation (11). $\begin{matrix}{ϕ}_{wc} = ∀ \left(i, k\right) , ∀ \left(p, q\right) \\ ∈ post \left(\left(i, k\right)\right) : \left(\begin{matrix}¬ \left({∨}_{\left(m, n\right) ∈ pre \left(\left(i, k\right)\right)}{e}_{m , n}={s}_{i , k}\right) \\ ∧ {e}_{i , k} \leq {s}_{p , q}\end{matrix}\right) ⇒ \\ \left({r}_{i , k}={s}_{i , k}∧{s}_{i , k}\leq {r}_{p , q}\right)\end{matrix}$ (11) Here, the antecedent captures processor idling via negation of disjunction over terms *e_{m,n}*=*s_{i,k}*, and whether another job (*p, q*) was scheduled post (*i*, *k*). The consequent ensures that (*i, k*) is scheduled immediately on release, and job (*p, q*) scheduled post idling is also released after the idling. In combination with the execution overlap-preventing constraint of equations (9) and (11), wherein equation (11) guarantees WC.

A deadline hit (or hit), tracked by a new symbolic Boolean variable h per job, occurs when the job meets its deadline as given in equation (12). ${h}_{i , k} ⇔ \left({s}_{i , k}+{\overline{E}}_{i}\leq {d}_{i , k}\right)$ (12)

It is to be noted that for a deadline hit, the job is assumed to execute full length i.e. up to the worst-case execution time: *e_{i,k=} s_{i,k} + E̅ᵢ.* Otherwise, a deadline miss is said to occur. In this work, the present disclosure support job kill policy in the presence of deadline misses: the scheduler dispatches a job (from its ready queue) for execution only if the above condition (equation 12) evaluates to true with respect to the current time. In other words, if and when a job is scheduled, it is guaranteed to meet its deadline assuming worst-case execution time, else the scheduler chooses to drop the job from its ready queue. The deadline miss (or miss) is given in equation (13). $¬ {h}_{i , k} ⇒ \left({s}_{i , k}={e}_{i , k}\right)$ (13)

A scheduler patch, in its simplest form, is a pre-defined list of jobs to be not scheduled i.e., "dropped" from the scheduler queue at runtime, such that control safety is guaranteed for all plants. Towards this, a flag per job was introduced, denoted the drop flag *f*, that amends the scheduler semantics in the following way as given in equation (14). ${f}_{i , k} ⇒ \left({s}_{i , k}={e}_{i , k}\right)$ (14) Setting this flag forces a kill scheduling decision, irrespective of whether the job would have met its deadline in the current task run i.e. the job is never scheduled in any task run.

At the control layer FIG. 1B, logical execution time model is considered, where plant sensing and actuation happen instantaneously at fixed discrete timesteps *k* × *δᵢ*, independent of the scheduling of controller tasks. When a controller task instance (*i, k*) is scheduled, it senses the plant state *x_{i,j,k}* at time instant *s*_{*i*,*j*}, processes the data, and writes the computed actuation value to a buffer at termination instant *e_{i,k}*, . This value is applied to the plant at the next timestep (*k +* 1) × *δᵢ*, corresponding to the control update *u*_{*i,k*+1}. Control updates are thus delayed by a timestep in the software implementation of the CPS. An update is successful if the corresponding job meets deadlines and the drop flag is unset, thus the following constraints are built (equations (15) through (19). Equation (18) indicates hold policy and equation (19) indicates zero policy. ${ϕ}_{update} = ∀ i : {u}_{i , 0} = 0$ (15) $∧ \left({h}_{i , k}∧¬{f}_{i , k}\right) ⇒ {{E}_{_}}_{i} \leq {e}_{i , k} - {s}_{i , k} \leq {\overline{E}}_{i}$ (16) $∧ \left({h}_{i , k}∧¬{f}_{i , k}\right) ⇒ {u}_{i , k} = {R}_{i} - {\sum }_{j = 1}^{n} {K}_{i , j} \times {x}_{i , j , k - 1}$ (17) $∧ ¬ \left({h}_{i , k}∧¬{f}_{i , k}\right) ⇒ {u}_{i , k} = {u}_{i , k - 1}$ (18) $¬ \left({h}_{i , k}∧¬{f}_{i , k}\right) ⇒ {u}_{i , k} = 0$ (19)

In an embodiment, while the encoding is restricted to system behavior unrolled up to the observation horizon *H*, to apply the analysis to control state evolution over infinite time, it is needed to establish convergence of control states at *t = H.* In other words, trajectories must not diverge when observed at *t = H*, relative to the initial set of states at *t* = 0 i.e., ϕ*ᵢₙᵢₜ*(equation 7) must hold at the end of the analysis horizon, permitting a loopback. Thus, the followings constraints are built as given in equation (20). ${ϕ}_{loop} : = ∀ i , j : {L}_{i , j} \leq {x}_{i , j , H} \leq {U}_{i , j}$ (20)

Finally, composing the control and scheduling behavior with the negation of the safety and loopback properties, an encoding of all possible error traces are obtained as given in equation (21). ${ϕ}_{err} : = {ϕ}_{control} ∧ {ϕ}_{runs} ∧ \left(¬{ϕ}_{safety}∨¬{ϕ}_{safetyloop}\right)$ (21) where *ϕ_{control}* is the conjunction of Eqns. 4 and 5, *ϕᵣᵤₙₛ* is the conjunction of equation (4) through (19), and ¬*ϕ_{safety}* is equation (8). The set of constraints *ϕₑᵣᵣ* is an exact encoding of trajectories and task runs leading to violation of either the control safety property or loopback. *ϕₑᵣᵣ* can be solved by off-the-shelf SMT solvers such as Z3, and any witness i.e. solution reported by the solver - a satisfying assignment to the symbolic variables - forms an error trace consisting of the trajectory, the task run, the safety (or loopback) violation, and, importantly for our proposed repair, values for the drop flags.

This discussion leads us to formulating the repair problem: is there an assignment F to the drop flags that guarantees control safety and loopback i.e. the set of constraints *ϕₑᵣᵣ*, composed with the drop map *F*, is unsatisfiable as given in equation (16). If such an assignment exists, then the list of flags set to true comprises the scheduler patch described earlier. The control safety repair problem is thus reduced to synthesis of the map *F* that satisfies as given in equation (22). $SAT \left({ϕ}_{err}∧F\right) = ⊥ ⋯$ (22)

At step 206 of the method 200, the one or more hardware processors 102 are configured by the programmed instructions to obtain a scheduler patch by repeating until a Satisfiability Modulo Theories (SMT) solver fails to generate an error trace. The method of generating the scheduler patch is explained with reference to steps 206a through 206g. The scheduler patch is a list of task instances (blacklist of task instances) which are not to be scheduled at runtime.

At step 206a of the method 200, the one or more hardware processors 102 are configured by the programmed instructions to generate a solution based on the plurality of constraints associated with each of the plurality of control systems using the SMT solver, wherein the solution is an error trace associated with a safety violated control system from among the plurality of control systems, wherein the error trace comprises (i) values of control state variables and (ii) run of the plurality of tasks indicating deadline hit and deadline miss.

At step 206b of the method 200, the one or more hardware processors 102 are configured by the programmed instructions to extract a hit-miss binary sequence based on the error trace associated with the safety violated control system, wherein a hit from the hit-miss binary sequence corresponds to correct control update for the associated control system based on standard control equations, and wherein a miss from the hit-miss binary sequence corresponds to zero (or hold, as stated in the control specification) control update control update.

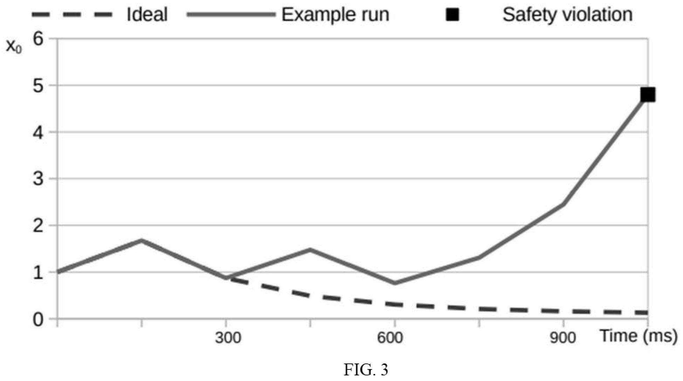

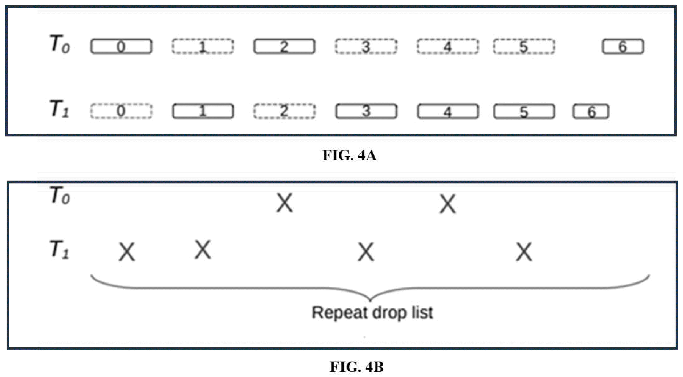

An example trajectory of system *C*₀ violating safety at timestep 7 (i.e., at 1050 ms) is shown in FIG. 3. The corresponding task run, consisting of instances from tasks *T*₀ and *T*₁ is shown in FIG. 4A, where the black solid rectangle indicates the task instance was successfully scheduled, and red dotted rectangle indicates the instance was killed by the scheduler (due to missing deadline). Clearly, instances 1,3,4,5 of *T*₀ that could not be scheduled (due to missing deadline) contributed to the violation.

At step 206c of the method 200, the one or more hardware processors 102 are configured by the programmed instructions to generate a plurality of binary sequence combinations by flipping the deadline misses to deadline hits based on the hit-miss binary sequence of the associated control system. For example, the flipping converts a binary '0' to a binary '1'.

At step 206d of the method 200, the one or more hardware processors 102 are configured by the programmed instructions to identify at least one binary sequence combination from among the plurality of binary sequence combinations by simulating the associated safety violated control system based on the plurality of binary sequence combinations such that the simulation results into (i) the associated control system safety and (ii) loopback convergence. The loopback convergence is where the associated control system state at the end of each simulation lies within the given initial set of states of the associated control system.

For example, to detect which of these are critical to restoring control safety, the deadline miss of instance 1 flipped to deadline hit, simulate the system with the revised deadline hit/miss sequence, and check if safety is restored as explained in step 208d. The instances 3,4,5 are repeated. Simulations with flips for instances 1,3,4 yield safety (with instance 5 safety is not restored), indicating that at least one of these must be scheduled.

Let *T_{i,j}* denote the *j^{t^{h}}* instance of task *Tᵢ.* Analysis of the task run in FIG. 4A shows that scheduling *T*_{1,1}, *T*_{1,3}, *T*_{1,4} led to deadline miss of *T*_{0,1}, *T*_{0,3}, *T*_{1,4}, respectively, and thus, to eliminate this safety violation at timestep 7, at least one of these instances should not get scheduled by the scheduler at runtime. Repeating this analysis over different task runs violating safety, it was converged (in 12 iterations) to the drop set {*T*_{1,0}, *T*_{1,1}, *T*_{0,2}, *T*_{1,3}, *T*_{0,4}, *T*_{1,5}} aka scheduler patch, shown in FIG. 4B, where "X" indicates the task instance is not to be scheduled at runtime. The scheduler dropping these instances at runtime guarantees safety of both control systems up to the horizon of 7 timesteps.

For example, in the initial segment of control evolution, system *C*₀ was found to be relatively more sensitive to deadline misses, resulting in *T*_{0,1}, *T*_{1,1} being included in the drop list and thereby guaranteeing *T*_{0,0}, *T*_{0,1} will be scheduled. In the latter part of evolution, as the system states reach a more stable region, safety is achieved by alternating job drops between the two tasks. Further, it was checked if the set of reachable states at timestep 7 is a subset of the initial states at timestep 0, which holds in this case, guaranteeing loopback. Thus, the synthesized drop list can be repeated infinitely after every 7 timesteps i.e., 1050ms.

At step 206e of the method 200, the one or more hardware processors 102 are configured by the programmed instructions to label one or more flipped instances from among the least one binary sequence combination as one or more critical task instances for the associated control system.

At step 206f of the method 200, the one or more hardware processors 102 are configured by the programmed instructions to identify a plurality of masking task instances for the one or more critical task instances, wherein the plurality of masking tasks causes a deadline miss to the at least one critical task.

At step 206g of the method 200, the one or more hardware processors 102 are configured by the programmed instructions to construct a refined plurality of constraints by dropping at least one task instance from among the plurality of masking task instances, prioritizing the at least one critical task thereby guaranteeing safety of the CPS, wherein above steps are repeated by incrementing the horizon to a predefined value when unable to drop a non-critical task making room for a critical task and, wherein the greater horizon is obtained by adding previous horizon with Least Common Multiplier (LCM) of periodic tasks.

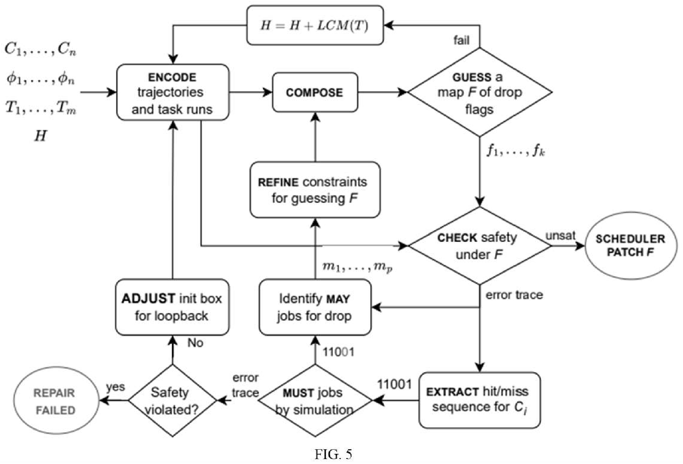

FIG. 5 illustrates a logical flow diagram for repairing violations of high level control safety properties, arising out of low-level timing uncertainties at the scheduling layer. The encode step accepts as input a set of (discrete) control system models (plant and controller) *C*₁, . . . ,*Cₙ* along with an initial set of states, safety properties *ϕ*₁, . . . , *ϕₙ*, a set of tasks *T*₁, . . . ,*Tₘ*, a policy for handling missed control updates, and an analysis horizon *H*, and constructs an SMT encoding of control and scheduling behaviors i.e., trajectories and task runs up to the horizon, along with safety and loopback constraints. The guess map step uses an SMT engine to solve the system of constraints to find a candidate assignment *F* to the drop flags. If guess fails i.e., the solver reports unsatisfiability of constraints, the analysis horizon *H* was incremented by the LCM of task periods, reconstruct the encoding and repeat. Else, the check safety step analyzes control safety and loopback overall system behaviors for the guessed drop flag assignments, again using an SMT engine. If the solver reports unsatisfiability i.e., there is no violation of control safety and loopback, repair success was reported. Flags that were set to true form the scheduler patch: these are jobs that are not to be scheduled for execution, irrespective of whether they would meet their deadline. Note that the patch computation is a one-time, offline exercise: the scheduler is supplied this list of jobs at system start i.e., before setting off the tasks for execution.

If the check safety solver call returns a witness i.e., an error trace, the extract step identifies the sequence of control updates for the control system that experienced safety violation. This sequence corresponds to the sequence of deadline hits and misses of the corresponding control task. Clearly, some of the jobs that missed deadline (and subsequently discarded) by the scheduler were critical to safety. The must step identifies these jobs by systematically flipping the deadline misses to hits i.e., enabling the (missed) control updates, and simulating the control system to validate if this flipping led to control safety. To enable scheduling of these critical jobs, (possibly non-critical) jobs occupying the processor and blocking the critical ones should be identified and discarded by the scheduler i.e., dropped from the scheduler's ready queue. This is computed during the identify may step. The refine step uses the list of may jobs to refine the constraints on subsequent guesses of the drop map, by constraining at least one of the drop flags of may jobs to be true i.e., a candidate for not getting scheduled.

If the must step is unable to identify critical jobs, indicating failure irreparable by flipping deadline miss to hit, it was checked if the error trace violated control safety, and if so, terminate the procedure reporting repair failure. Otherwise, the error trace violated loopback bounds, indicating divergence of control states, which necessitates growing the initial set of states to include these newly observed ones (adjust step), and restart the analysis.

**Table II**

| Notation | Type | Description |
|---|---|---|
| *x_{i,j,k}* | Real | state of *i*-th plant, *j*-th dim, *k*-th timestep |
| *u_{i,k}* | Real | control update for *i*-th plant at *k*-th step |
| *r_{i,k}, s_{i,k}* | Int | release, start, end, and deadline |
| *e_{i,k}, d_{i,k}* | Int | times of *k*-th job of *i*-th task |
| *h_{i,k}* | Boolean | job (*i*, *k*) hits/misses deadline |
| *f_{i,k}* | Boolean | drop job (*i*, *k*) from scheduler queue |

Pseudocode 1 illustrates approach for guess- check-repair of safety violations, by synthesizing a scheduler patch i.e. a drop map of jobs that are not critical to control safety. The algorithm takes as input a set of control systems *C* with initial sets of states (*L, B*), associated safety property ϕ*_{safety}*, the task specification *T* describing the tasks, a seed analysis horizon *H* and missing control update policy, and encodes the joint control and task behavior, over the symbolic variables listed in Table. II. *F̂* denotes constraints on synthesizing the drop map, and *F̂* is initialized to true (line 1).

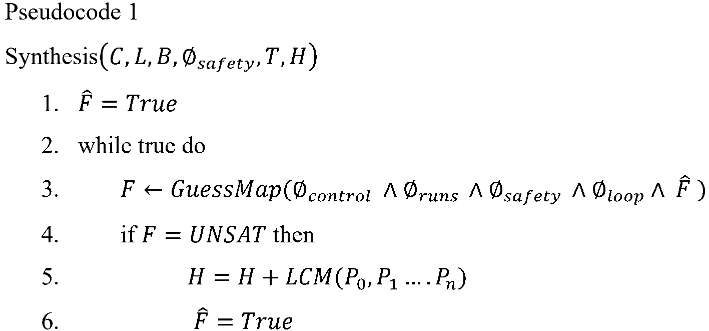

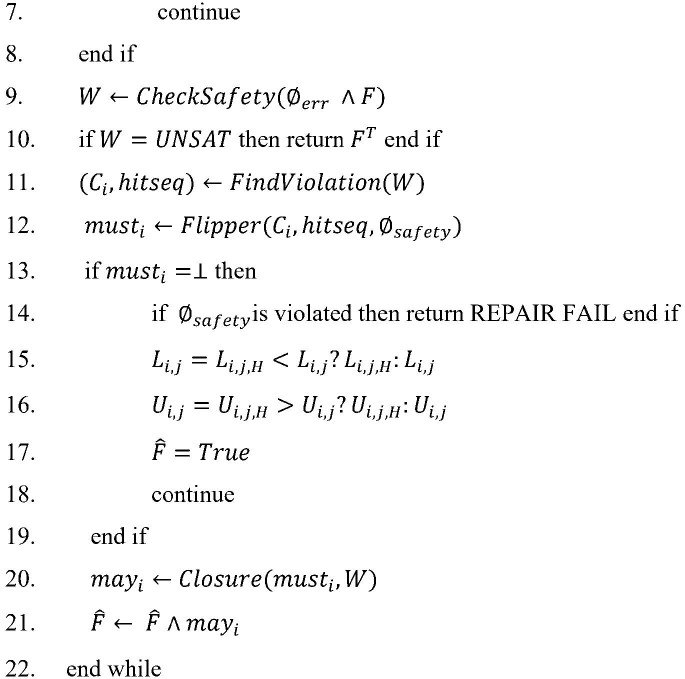

Now referring to Pseudocode 1, GuessMap invokes an SMT solver internally to find a candidate map *F* that satisfies control safety and loopback i.e., there must be at least one trajectory and one task run over which *F* yields control safety and loopback (line 3). When the solver reports a witness, GuessMap parses the witness to extract assignments to the *f* variables, forming the map *F*. In case the solver reports unsat i.e., a conflict of constraints, no drop map exists over the horizon *H*, indicating safety and/or loopback violation is unavoidable (line 4), the horizon is increased by the LCM of the periodic tasks (i.e., the hyperperiod, which gives a window that aligns jobs of all tasks), reset *F̂* and restart with a new encoding (lines 5-7).

Next, CheckSafety composes the encoding of error traces with the map *F*, and invokes an SMT solver internally to verify whether *F* holds over all system behaviours i.e. trajectories from all initial states, and over all task runs (line 9). If the solver reports unsat, indicating neither safety nor loopback violation, the algorithm terminates successfully returning the subset of flags set to true within *F*, forming the scheduler patch *F^{T}* (line 10). Else, when the solver reports a witness w, Find Violation (line 11) parses it to identify the control system *Cᵢ* that experienced safety violation, along with the deadline hit/miss sequence of the corresponding control task e.g. 1011001. A hit (1) at position *i* indicates successful control update applied at step *i*+1, and a miss (0) indicates otherwise.

Clearly, safety was violated due to some critical job(s) missing deadline, leading to missed control update(s). The repair phase is proceeded as follows.

Procedure flipper is invoked (line 12) to identify jobs critical to safety of *Cᵢ*, termed as must jobs, with respect to the witness *w*.

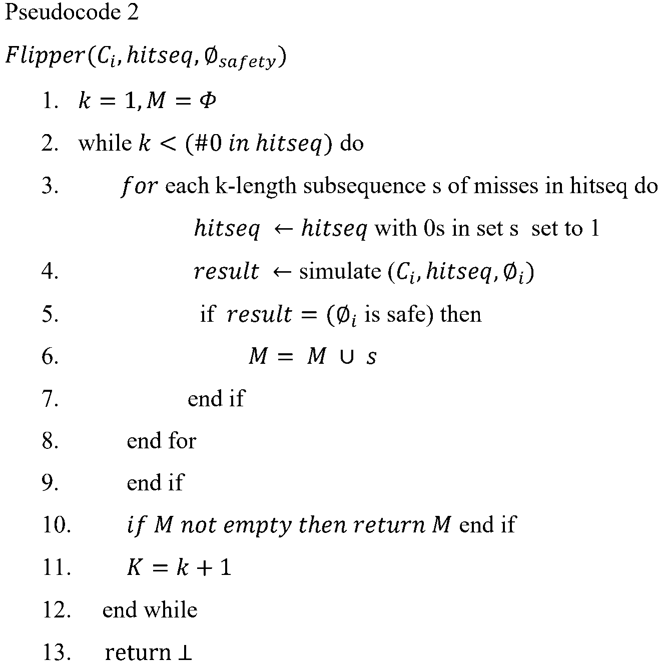

Procedure flipper, listed in Pseudocode 2 takes as input the control system *Cᵢ* and the hit/miss sequence hitseq reported by FindViolation that led to safety property violation of *Cᵢ*. Flipper examines all subsequences of a given length (lines 2-3) of deadline misses (including drops) in hitseq, to identify which ones are critical for safety satisfaction of *Cᵢ*. If a subsequence of missed jobs is identified as critical by setting the miss to hit (line 4) i.e., enabling successful control update in those positions, and simulating *Cᵢ* with the updated hitseq (line 5). The initial state of *Cᵢ* for the simulation is extracted from w. For example, with *k* = 1, and hitseq=1011001, a total of three simulations are done with updated sequences 1111001, 1011101, and 1011011. With *k* = 2, three sequences 1111101, 1111011, and 1011111 are simulated. If a simulation results in safety satisfaction, the subsequence is stored (line 7). flipper terminates after discovering all critical subsequences (line 10) at the current *k* level, else proceeds to check for longer ones (line 11). These subsequences are denoted as must, as there is at least one task run (i.e., w) where not scheduling these led to safety violation.

In Pseudocode 1, if flipper fails to identify must subsequences (line 13), indicating failure irreparable by flipping deadline misses to hits, the simulations of *Cᵢ* are examined : if safety is violated, the algorithm terminates (line 14) reporting repair failure, or if loopback bounds are violated, indicating new reachable states have been discovered, the *L*, *B* bounds on initial states are updated, *F̂* is reset and restarted with the revised encoding (lines 15-18). Else, when flipper succeeds in identifying must subsequences, procedure closure is invoked (line 20) to identify candidate jobs, termed may, that could be dropped, or their drop flags reset, so as to enable scheduling of must jobs.

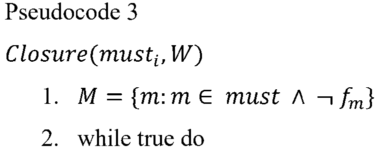

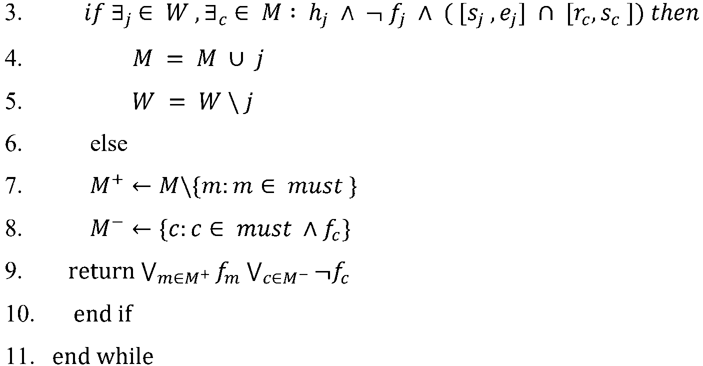

Procedure closure, listed in Pseudocode 3, takes as input the must set of subsequences for *Cᵢ* and the witness *W*, and initializes a set *M* to jobs comprising the subsequences within must (line 1), except the dropped ones. closure aims to transitively collect jobs that interfere with the scheduling of critical ones. Suppose there is a job *j* ∈ *W* whose execution overlaps with the waiting time of some critical job *c* ∈ *M* (line 3), under the conditions that *j* hit deadline and was not dropped i.e., *j* was successfully scheduled. Then, *j* potentially contributes to the deadline miss (and subsequent kill) ofc, and qualifies to be a drop candidate (lines 4-5). The while loop (line 2) accumulates all such jobs interfering with the scheduling of the critical ones, or the newly discovered interfering candidates. The loop terminates on reaching a fixpoint which corresponds to, in the worst case, the contiguous subsequence of jobs in trace W prefixing the critical jobs. Candidate drop jobs are extracted from *M* (line 7), and critical jobs that were dropped are identified (line 8). Procedure closure returns a disjunction that sets the flags of drop candidates and resets the flags of critical jobs (line 9).

In pseudocode 1, having identified the necessary constraints over critical and possibly non-critical jobs with respect to *Cᵢ* and *W* (line 9), This was conjuncted with existing constraints *F̂* (line 21). This ensures one or more may jobs will be dropped (freeing the processor for critical ones), or a critical job will not be dropped, so that this safety violation W can be potentially blocked. In other words, as Alg.1 mines more and more may sets, the constraint *F̂* strengthens over the *f* variables. *F̂* initialized to true at the beginning (line 1) corresponds to an abstraction over the drop map *F* i.e., initially, there is no restriction on how *F* could be synthesized. This abstraction is subsequently refined via the may sets i.e., the disjunction-conjunction over may sets constrains the synthesis of *F* in a way that some *f* flags are forced to be set to true or false. This discussion leads to the following theorem on repairing safety violations.

### Experimentation:

In an embodiment, the present disclosure has been experimented in a prototype tool built using Python3 scripts and the Z3 SMT solver (version 4.11) via API access. All experiments were run on a laptop running Ubuntu 22 64-bit OS on an Intel i5 processor with 16GB RAM.

**Case study 1:** A control layer running three applications is considered: an electronic wedge system, an F1Tenth model car adapted for setting (linearized, *x*1 dimension dropped), with a controller system and a synthetic system. All systems were discretized at 100ms. The plant and controller specifications, initial states (intervals of values over each dimension) and safety box are listed in Table III A and Table III B.

These applications were considered as safety-critical, thus requiring rigorous analysis to establish control safety. The corresponding (synthetic) task specification, with period set to the discretization timestep of the controllers, is listed in Table IV. All times are in millisecond unit. The task specification is set up such that the processor is overloaded, thus jobs will be killed on missing deadline. In particular, as the periods of the 3 tasks are equal, the scheduler picks a task instance non-deterministically for execution. In each invocation, in the worst case, any 2 of 3 task instances will be scheduled i.e., any 1 of the 3 instances will be killed.

**Table III A**

| id | *A* | *B* |
|---|---|---|
| 0 | $\left[\begin{matrix}1.0 & 1.3 & 5.11811024 \\ 0.0 & 1.0 & 3.93700787 \\ 0 & 0 & 0\end{matrix}\right]$ | $\left[\begin{matrix}0 \\ 0 \\ 1.0\end{matrix}\right]$ |
| 1 | $\left[\begin{matrix}0.54947186 & 0.07239801 & 0.28308422 \\ 0.0144796 & 0.93318132 & 0.0069334 \\ 0 & 0 & 0\end{matrix}\right]$ | $\left[\begin{matrix}0 \\ 0 \\ 1.0\end{matrix}\right]$ |
| 2 | $\left[\begin{matrix}0.36783052 & 0.05635456 & 0.01054672 \\ - 0.00112709 & 0.81866696 & 0.16427936 \\ 0 & 0 & 0\end{matrix}\right]$ | $\left[\begin{matrix}0 \\ 0 \\ 1.0\end{matrix}\right]$ |

**Table III B**

| id | *K* | Init State | Safety box |
|---|---|---|---|
| 0 | $\left[0.12847214 0.41262919 1.62452438\right]$ | $\left[\begin{matrix}- 1.0 , 1.0 \\ - 2.0 , 1.1 \\ 0.0 , 0.0\end{matrix}\right]$ | 4.0(box) |
| 1 | $\left[0.05886312 0.07868521 0.03028579\right]$ | $\left[\begin{matrix}0.0 , 1.0 \\ 0.0 , 1.0 \\ 0.0 , 0.0\end{matrix}\right]$ | 1.5(pipe) |
| 2 | $\left[0.00080453 0.15106493 0.03031163\right]$ | $\left[\begin{matrix}- 0.1 , 1.0 \\ - 0.1 , 1.0 \\ 0.0 , 0.0\end{matrix}\right]$ | 1.0(pipe) |

**Table IV**

| **Id** | **Type** | **Period** | **BCET, WCET** |
|---|---|---|---|
| 0 | Per | 100 | [20,50] |
| 1 | Per | 100 | [20,50] |
| 2 | Per | 100 | [10,20] |

With analysis horizon *H* initially set to 500ms, under NP-EDF scheduling and missed control update policy set to zero, our tool reported unsat at the GuessMap step, requiring *H* to be eventually increased in steps of LCM=100ms, to 800ms. In an example error trace, task 1 missed two deadlines consecutively at instances 1 and 2, leading to safety violation for *C*₁ (F1Tenth) at timestep 4. This led to may job computation as {(0, 1), (1, 1), (1, 2), (0, 2)}. Subsequently, the drop set was guessed as {(0,2)}, however, the analysis discovered that the electronic wedge system was relatively more sensitive to job drops in the initial segment of evolution, and dropping {(0,2)} led to safety violation. Continuing the refinement, the final drop set was synthesized as {(1,0), (2,1), (1,2), (1,4), (0,5), (1,6)} (spanning 800ms) in 21 iterations, which guarantees safety of all control systems including loopback constraints. In other words, the scheduler augmented with this drop set enables safe packing of multiple control applications on the processor, without requiring modifications to the control applications, the task specification or the scheduling policy.

**Case study 2:** Three applications at the control layer are considered in this case study: an F1Tenth car model as earlier but discretized at 200ms, an RC network model discretized at 100ms, and a DC motor control system discretized at 100ms. The control specification is shown in Table V, along with the safety property describing box dimension or maximum deviation from ideal behaviour (safety pipe). Table V shows the corresponding task specification, with 4 tasks including one sporadic task. Jitter is set to 1% of the period. All times are in millisecond unit. The processor is clearly overloaded, with jitter and the non-deterministic sporadic task arrival time leading to many different sequences of jobs.

**Table V**

| **Id** | **Type** | **Period** | **BCET, WCET** | **Jitter** |
|---|---|---|---|---|
| 0 | Per | 200 | [50,100] | 2 |
| 1 | Per | 100 | [30,55] | 1 |
| 2 | Per | 100 | [20,50] | 1 |
| 3 | spo | 200 | [10,30] | 0 |

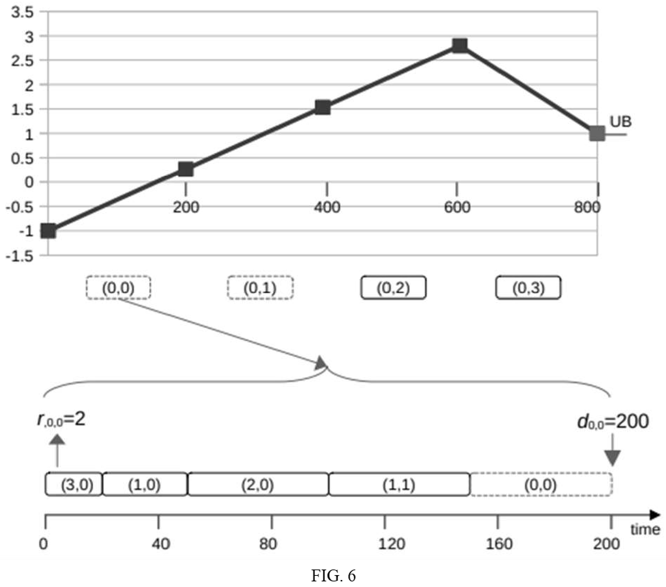

It was assumed that the sporadic task may service an interrupt and so cannot be killed even if it misses deadline, nor can it be considered for inclusion in the drop set. With the analysis horizon set to 800ms and missed control update policy set to zero, it was observed that F1 Tenth system was relatively more sensitive to deadline misses compared to the other two systems, and experienced safety violation whenever it was included in the guessed drop set. On the other hand, system *C*₁ (RC controller) was relatively more robust to deadline misses. An example error trace for system *C*₀ (F1Tenth) illustrating violation of loopback upper bound due to deadline misses is shown in FIG. 6. The trajectory, consisting of 4 timesteps, shown in the upper part of the figure, maintains safety but violates the loopback upper bound of 1.0 at *H =* 800*ms*. Jobs (0,0) and (0,1), shown as dotted red rectangles, missed deadline, of which the deadline miss of job (0,0) is zoomed in and shown in the lower part of the figure. Job (0,0) was released at 2ms (jitter contributed to delay of 2ms for this instance), jobs (1,0) and (2,0) were released at 1ms (jitter contributed to delay of 1ms for these instances) allowing sporadic job (3,0) that was released at time 0 to execute first, that eventually led to deadline miss of (0,0) as there was not enough time to complete execution of (0,0), assuming worst-case execution time requirement of 100ms. In another example error trace, instance (0,1) was released at time *t* = 201*ms* (jitter contributing a delay of 1 unit for this instance) with deadline at 400ms. However, instances (2,2), (1,2), and (1,3) released at 200, 201 and 300ms respectively, occupied the processor for 50, 50 and 20ms each, due to their earlier deadlines. This led to deadline miss for instance (0,1) and subsequent safety violation, leading to may set of {(2,2), (1,2), (1,3)}. Continuing the refinement, our tool reported a drop set {(1,0), (1,1), (1,3), (1,4), (2,5)} after 6 iterations, guaranteeing safety and loopback.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), the method comprising:
receiving (202), via one or more hardware processors, an input data associated with a Cyber-Physical System (CPS), wherein the input data comprises a control specification associated with each of a plurality of control systems, a task specification associated with each of a plurality of tasks, a horizon, and a scheduling policy associated with a task scheduler;
generating (204), via the one or more hardware processors, a plurality of constraints for each of the plurality of control systems, based on the input data, using a symbolic logic generator; and
obtaining (206), via one or more hardware processors, a scheduler patch, by repeating until a Satisfiability Modulo Theories (SMT) solver fails to generate an error trace:
generating (206a) a solution based on the plurality of constraints associated with each of the plurality of control systems using the SMT solver, wherein the solution is an error trace associated with a safety violated control system from among the plurality of control systems, wherein the error trace comprises (a) values of one or more control state variables and (b) run of the plurality of tasks indicating deadline hit and deadline miss;
extracting (206b) a hit-miss binary sequence based on the error trace associated with the safety violated control system, wherein a hit from the hit-miss binary sequence corresponds to correct control update for the associated control system based on standard control equations, and wherein a miss from the hit-miss binary sequence corresponds to zero;
generating (206c) a plurality of binary sequence combinations by flipping the deadline misses to deadline hits based on the hit-miss binary sequence of the associated control system;
identifying (206d) at least one binary sequence combination from among the plurality of binary sequence combinations by simulating the associated safety violated control system based on the plurality of binary sequence combinations such that the simulation results into (a) the associated control system safety and (b) loopback convergence;
labelling (206e) one or more flipped instances from among the at least one binary sequence combination as one or more critical task instances for the associated control system;
identifying (206f) a plurality of masking task instances for the one or more critical task instances, wherein the plurality of masking tasks causes a deadline miss to the at least one critical task instance; and
constructing (206g) a refined plurality of constraints by dropping at least one task instance from among the plurality of masking task instances, prioritizing the at least one critical task thereby guaranteeing safety of the CPS, wherein above steps are repeated by incrementing the horizon to a predefined value when unable to drop a non-critical task making room for a critical task and, wherein the greater horizon is obtained by adding previous horizon with Least Common Multiplier (LCM) of periodic tasks.

2. The method as claimed in claim 1, wherein the plurality of control specifications comprises initial sets of states, the matrices describing the control system dynamics, and an associated plurality of safety properties.

3. The method as claimed in claim 1, wherein the task specification associated with each of the plurality of tasks comprises a task ID, task type, a task period, a worst case execution time, a best case execution time, a jitter and a priority.

4. The method as claimed in claim 1, wherein the scheduler patch is a list of task instances which are not to be scheduled at runtime.

5. The method as claimed in claim 1, wherein loopback convergence is where the associated control system state at the end of each simulation lies within the given initial set of states of the associated control system.

6. The method as claimed in claim 1, wherein the initial control states are adjusted if no binary sequence combination yields system safety.

7. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:
receive an input data associated with a Cyber-Physical System (CPS), wherein the input data comprises a control specification associated with each of a plurality of control systems, a task specification associated with each of a plurality of tasks, a horizon, and a scheduling policy associated with a task scheduler;
generate a plurality of constraints for each of the plurality of control systems based on the input data using a symbolic logic generator; and
obtain a scheduler patch by repeating until a Satisfiability Modulo Theories (SMT) solver fails to generate an error trace:
generate a solution based on the plurality of constraints associated with each of the plurality of control systems using the SMT solver, wherein the solution is an error trace associated with a safety violated control system from among the plurality of control systems, wherein the error trace comprises (a) values of control state variables and (b) run of the plurality of tasks indicating deadline hit and deadline miss;
extract a hit-miss binary sequence based on the error trace associated with the safety violated control system, wherein a hit from the hit-miss binary sequence corresponds to correct control update for the associated control system based on standard control equations, and wherein a miss from the hit-miss binary sequence corresponds to zero;
generate a plurality of binary sequence combinations by flipping the deadline misses to deadline hits based on the hit-miss binary sequence of the associated control system;
identify at least one binary sequence combination from among the plurality of binary sequence combinations by simulating the associated safety violated control system based on the plurality of binary sequence combinations such that the simulation results into (a) the associated control system safety and (b) loopback convergence;
label one or more flipped instances from among the at least one binary sequence combination as one or more critical task instances for the associated control system;
identify a plurality of masking task instances for the one or more critical task instances, wherein the plurality of masking tasks causes a deadline miss to the at least one critical task instance; and
construct a refined plurality of constraints by dropping at least one task instance from among the plurality of masking task instances, prioritizing the at least one critical task thereby guaranteeing safety of the CPS, wherein above steps are repeated by incrementing the horizon to a predefined value when unable to drop a non-critical task making room for a critical task and, wherein the greater horizon is obtained by adding previous horizon with Least Common Multiplier (LCM) of periodic tasks.

8. The system as claimed in claim 7, wherein the plurality of control specifications comprises initial sets of states, the matrices describing the control system dynamics, and an associated plurality of safety properties.

9. The system as claimed in claim 7, wherein the task specification associated with each of the plurality of tasks comprises a task ID, task type, a task period, a worst case execution time, a best case execution time, a jitter and a priority.

10. The system as claimed in claim 7, wherein the scheduler patch is a list of task instances which are not to be scheduled at runtime.

11. The system as claimed in claim 7, wherein loopback convergence is where the associated control system state at the end of each simulation lies within the given initial set of states of the associated control system.

12. The system as claimed in claim 7, wherein the initial control states are adjusted if no binary sequence combination yields system safety.

13. One or more non-transitory machine-readable information storage mediums comprising one or more instructions which when executed by one or more hardware processors cause:
receiving an input data associated with a Cyber-Physical System (CPS), wherein the input data comprises a control specification associated with each of a plurality of control systems, a task specification associated with each of a plurality of tasks, a horizon, and a scheduling policy associated with a task scheduler;
generating a plurality of constraints for each of the plurality of control systems based on the input data using a symbolic logic generator; and
obtaining a scheduler patch, by repeating until a Satisfiability Modulo Theories (SMT) solver fails to generate an error trace:
generating a solution based on the plurality of constraints associated with each of the plurality of control systems using the SMT solver, wherein the solution is an error trace associated with a safety violated control system from among the plurality of control systems, wherein the error trace comprises (a) values of control state variables and (b) run of the plurality of tasks indicating deadline hit and deadline miss;
extracting a hit-miss binary sequence based on the error trace associated with the safety violated control system, wherein a hit from the hit-miss binary sequence corresponds to correct control update for the associated control system based on standard control equations, and wherein a miss from the hit-miss binary sequence corresponds to zero;
generating a plurality of binary sequence combinations by flipping the deadline misses to deadline hits based on the hit-miss binary sequence of the associated control system;
identifying at least one binary sequence combination from among the plurality of binary sequence combinations by simulating the associated safety violated control system based on the plurality of binary sequence combinations such that the simulation results into (a) the associated control system safety and (b) loopback convergence;
labelling one or more flipped instances from among the at least one binary sequence combination as one or more critical task instances for the associated control system;
identifying a plurality of masking task instances for the one or more critical task instances, wherein the plurality of masking tasks causes a deadline miss to the at least one critical task instance; and
constructing a refined plurality of constraints by dropping at least one task instance from among the plurality of masking task instances, prioritizing the at least one critical task thereby guaranteeing safety of the CPS, wherein above steps are repeated by incrementing the horizon to a predefined value when unable to drop a non-critical task making room for a critical task and, wherein the greater horizon is obtained by adding previous horizon with Least Common Multiplier (LCM) of periodic tasks.

14. The one or more non-transitory machine readable information storage mediums as claimed in claim 13, wherein the plurality of control specifications comprises initial sets of states, the matrices describing the control system dynamics, and an associated plurality of safety properties.

15. The one or more non-transitory machine readable information storage mediums as claimed in claim 13, wherein the task specification associated with each of the plurality of tasks comprises a task ID, task type, a task period, a worst case execution time, a best case execution time, a jitter and a priority.
